Europäisches Patentamt

European Patent Office

Office européen des brevets

(11) Numéro de publication: **0 360 715**
**A1**

## (12) DEMANDE DE BREVET EUROPEEN

(21) Numéro de dépôt: 89430027.6

(22) Date de dépôt: 22.09.89

(51) Int. Cl.⁵: **A 47 J 27/04**
A 47 J 39/00, F 24 C 15/32

(30) Priorité: 23.09.88 FR 8812565

(43) Date de publication de la demande:
28.03.90 Bulletin 90/13

(84) Etats contractants désignés: **DE ES GB IT**

(71) Demandeur: **Grandi, René**
**Quartier Loudon -Ruy**
**F-38300 Bourgoin Jallieu (FR)**

(72) Inventeur: **Grandi, René**
**Quartier Loudon -Ruy**
**F-38300 Bourgoin Jallieu (FR)**

(74) Mandataire: **Roman, Michel**
**CABINET ROMAN 35, rue Paradis**
**F-13001 Marseille (FR)**

(54) **Dispositif d'unité de cuisson par introduction modulable de vapeur fluente destiné à améliorer la répartition de la cuisson et du gratinage des produits.**

(57) Dispositif constitué d'une enceinte de cuisson (1) sous laquelle une chaudière (3) produit la vapeur pour la cuisson des aliments. Une vanne (6) modulable laisse pénétrer directement la vapeur dans l'enceinte de cuisson (1).

Une turbine (7) située sur le sommet de cette enceinte, vient aspirer la vapeur et la diriger dans un chemin préférentiel (9) équipé de surchauffeurs.

La vapeur ainsi surchauffée, par la propulsion de la turbine (6) retourne dans l'enceinte de cuisson (1) par les parois latérales (10) de celle-ci.

L'excédent de vapeur produit par la chaudière (3) est évacué par une hourra (11) dirigeant la vapeur dans un couloir de condensation (12). Un clapet (13) régule l'échappement de cette vapeur, et sera plus ou moins fermé selon que la vanne (6) aura modulé l'entrée de la vapeur dans l'enceinte de cuisson.

FIG. 1

EP 0 360 715 A1

## Description

### Dispositif d'unité de cuisson par introduction modulable de vapeur fluente destiné à améliorer la répartition de la cuisson et du gratinage des produits

L'objet de l'invention concerne un 1° certificat d'addition au Brevet N° 87 11 704, pour un dispositif d'unité de cuisson par introduction modulable de vapeur fluente avec chemin préférentiel à surchauffeurs et couloir de condensation des vapeurs résiduelles.

Il est destiné à améliorer la cuisson et à répartir le gratinage des produits introduits.

Le dispositif décrit dans le brevet 87 11 704, bien que donnant satisfaction pour les fonctions éventuelles, ne permettait pas de gratiner et de dorer uniformément les plats introduits, car les calories d'air ou de vapeur passant par le couloir des surchauffeurs arrivait toujours du même côté latéral du dispositif. Et pour gratiner et dorer les produits, cela aurait nécessité un plateau tournant permettant de changer en permanence la surface de cuisson du produit. Ce système présentait un investissement de plateau et de moteur en plus.

Le dispositif suivant l'invention supprime ces inconvé nients et permet d'obtenir une cuisson et un brunissage plus réguliers et répartis des produits, et ceci en changeant l'emplacement de la vanne modulable et du dispositif de ventilation, qui de ce fait peut être aussi bien disposé de façon horizontale que verticale.

La chaudière à production de vapeur permet par une vanne modulable située sous l'enceinte de cuisson, l'arrivée de cette vapeur de façon modulable et directement dans l'enceinte de cuisson, sans passer comme dans le brevet cité ci-dessus par les surchauffeurs.

Cette émission de vapeur dans tout l'ensemble de l'enceinte permet donc la cuisson des produits, à vapeur douce, de façon normale pour ce type de cuisson.

Une turbine actionnée par un moteur située au sommet et au centre de l'enceinte, vient aspirer la grande quantité de vapeur, et vient pulser et la surchauffer dans le chemin préférentiel équipé de surchauffeurs électriques, et elle revient de nouveau dans l'enceinte de cuisson par les parois latérales de celle-ci, formant ainsi un cycle continu.

La vanne laissant passer la vapeur de façon modulable peut être une vanne à boisseau ou toute autre vanne permettant de doser l'entrée de la vapeur dans l'enceinte

L'excédent de vapeur produit par la chaudière, selon l'ouverture de la vanne, se dirige par une hourra dans le couloir de condensation entourant l'enceinte de cuisson dans sa partie supérieure.

Un clapet permet la régulation de l'échappement de cette vapeur excédentaire dans le couloir de condensation.

Les condensats de cette vapeur sont récupérés dans un tiroir à condensats.

Le couloir de condensation et l'enceinte de cuisson avec ses surchauffeurs sont fortement isolés l'un de l'autre.

Dans le fond de l'enceinte de cuisson deux orifices permettent l'évacuation des graisses et résidus formés pendant la cuisson, ceux-ci sont récupérés dans le tiroir à condensats.

Sur le dessin ci-annexé, donné à titre d'exemple non limitatif, d'une des formes de réalisation de l'invention

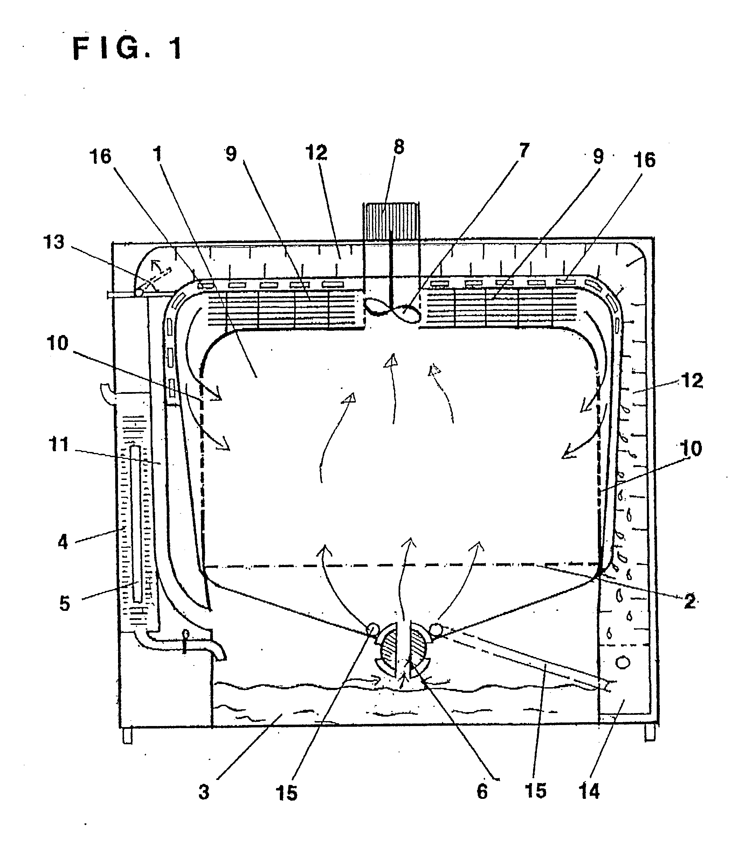

La figure 1 représente une vue en coupe et de face de l'ensemble du dispositif.

Il comporte une enceinte 1 dans laquelle les produits sont posés sur une clayette 2.

La chaudière 3 est alimentée par une réserve d'eau 4 avec un voyant 5 de contrôle.

La production de vapeur passe par la vanne 6, modulable à boisseau ou tout autre vanne.

La turbine 7 actionnée par le moteur 8 aspire la vapeur et la dirige dans le chemin préférentiel des surchauffeurs 9, cette vapeur ainsi surchauffée revient dans l'en ceinte de cuisson par les parois 10, formant un cycle en continu.

Selon l'ouverture ou la fermeture de la vanne 6, les excédents de vapeur de la chaudière 3 sont dirigés par une hourra 11 dans le couloir de condensation 12, un clapet 13 régule l'échappement de cette vapeur, et est complétement fermé spécialement lorsque l'on a besoin de toute la vapeur dans l'enceinte de cuisson et que alors la vanne 6 est totalement ouverte.

Les condensats sont récupérés dans un tiroir à condensats 14. Des orifices 15 évacuent les graisses et résidus de la cuisson, et sont également récupérés dans ce même tiroir à condensats 14. Une forte isolation 16, sépare l'enceinte de cuisson 1 et le chemin préférentiel des surchauffeurs 9 du couloir de condensation 12.

Toutefois les formes, les dimensions et dispositions des différents éléments pourront varier dans la limite des équivalents comme d'ailleurs les matières utilisées pour leur fabrication sans changer pour cela, la conception générale de l'invention qui vient d'être décrite.

### Revendications

1. Dispositif d'unité de cuisson pour cuire par introduction modulable de vapeur fluente ou air chaud pulsé selon la revendication 1 du Brevet Principal N° 87 11 704 du 18 Août 1987, il est destiné à améliorer la répartition de la cuisson et du gratinage des produits, se caractérisant par le fait que la vapeur produite par la chaudière (3) débouche directement dans l'enceinte de cuisson (1), par la vanne (6) modulant l'entrée de la vapeur.

2. Dispositif selon la revendication 1, caractérisé en ce que la vapeur contenue dans l'enceinte (1) de cuisson est aspirée par une turbine (7) qui dirige la vapeur dans le chemin préférentiel équipé de surchauffeurs (9), cette vapeur ainsi surchauffée revient par la propulsion de la turbine (7), dans l'enceinte de cuisson (1) par les parois latérales (10) de celle-ci.

3. Dispositif selon la revendication 1, caractérisé en ce que l'excédent de vapeur produit par la chaudière (3) est évacué par une hourra (11), jusqu'au couloir de condensation (12). Un clapet (13) vient réguler l'échappement de cette vapeur, il est plus ou moins ouvert ou fermé selon que la vanne (6) modulable aura laissé passer la vapeur désirée dans l'enceinte de cuisson.

# F I G. 1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | US-A-4426923 (TAKASHI) <br> * colonne 6, ligne 25 - colonne 6, ligne 57; figure 2 * <br> --- | 1, 2 | A47J27/04 <br> A47J39/00 <br> F24C15/32 |
| A | FR-A-2491595 (MANIERE) <br> * revendications 1, 2; figures * <br> --- | 1 | |
| A | DE-A-2659865 (DEUTSCH) <br> * revendication 1; figure 1 * <br> --- | 1 | |
| A | DE-A-2842771 (LECHMETALL) <br> --- | | |
| A | DE-U-8131827 (MEISTER) <br> ----- | | |

DOMAINES TECHNIQUES RECHERCHES (Int. Cl.5)

A47J
F24C

Le présent rapport a été établi pour toutes les revendications

| Lieu de la recherche | Date d'achèvement de la recherche | Examinateur |
|---|---|---|
| LA HAYE | 20 DECEMBRE 1989 | VANHEUSDEN J. |

EPO FORM 1503 03.82 (P0402)